# EUROPEAN PATENT APPLICATION

(11) **EP 3 399 693 A1**
(43) Date of publication of application: **07.11.2018**
(21) Application number: 16881701.3
(22) Date of filing: 22.12.2016
(51) Int. Cl.: H04L 12/24, G06F 13/00, H04L 12/46, H04L 12/66, H04M 3/00

(54) **COMMUNICATION APPARATUS, COMMUNICATION SYSTEM, AND NETWORK MANAGEMENT METHOD**

(30) Priority: 28.12.2015 JP 2015256703
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: TASHIRO Taichi, Tokyo 105-8001 (JP); INAMURA Hiroyuki, Tokyo 105-8001 (JP); BABA Kenji, Tokyo 105-8001 (JP); SHIMADATE Atsushi, Tokyo 105-8001 (JP)
(74) Representative: Moreland, David
(86) International application number: PCT/JP2016/088447
(87) International publication number: WO 2017/115726

(57) **Abstract**

The communication device of the embodiments is a communication device which, in a communication system having a management apparatus for acquiring device information on a device to be managed, transmits the device information to the management apparatus. The communication device includes a device information classifier and a unique information transmitter. The device information classifier classifies the device information into common information which is device information essential to the device related to the communication device and unique information which is device information unique to the device related to the communication device. The unique information transmitter transmits the unique information classified by the device information classifier to the management apparatus when there is a request from the management apparatus.

## Description

### [Technical Field]

Embodiments of the present invention relate to a communication device, a communication system, and a network management method.

### [Background Art]

In recent years, there has been an increasing need to connect various communication devices to a network. For example, an Internet of Things (loT) technology for creating new solutions by connecting everything in the world to the Internet has attracted attention. For example, a device such as a sensor or a communication device is provided in each individual item, and it is possible to acquire a movement, distribution, and the like of an item on the basis of sensor measurement information acquired for each individual item. In addition, installing various sensors in office buildings, hotels, or commercial facilities such as factories, and utilizing various types of information acquired by the sensors for energy saving or marketing is being investigated.

On the other hand, communication methods of sensors have diversified in recent years. The communication protocol of a sensor or the network configuration of a backbone is often different depending on a manufacturer and an application, and thus it is difficult to standardize it. For this reason, it is difficult to unify and build up a communication system of a specific communication method which responds to the above needs. Therefore, a form of a communication network that allows a mixture of different types of protocols has been sought.

However, a network becomes complicated due to the mixture of different types of protocols, and thus a management load of a network administrator is expected to increase. In addition, problems such as an increase in an amount of information required for managing devices connected the network (hereinafter referred to as "network management information"), and compression of the network caused by traffic of the network management information are also expected to occur. For this reason, it is desired to establish a method of reducing a load of the management of a network in a communication system in which communication protocols are mixed.

### [Citation List]

### [Patent Literature]

[Patent Literature 1] Japanese Patent No. 4136857

### [Summary of Invention]

### [Problem to be Solved by the Invention]

An object of the present invention is to provide a communication device, a communication system, and a network management method which can reduce a load of management of a network in a communication system in which different communication protocols are mixed.

### [Means to Solve the Problem]

A communication device of embodiments is a communication device which, in a communication system having a management apparatus for acquiring device information on a device to be managed, transmits the device information to the management apparatus. The communication device includes a device information classifier and a unique information transmitter. The device information classifier classifies the device information into common information which is device information essential to the device related to the communication device and unique information which is device information unique to the device related to the communication device. The unique information transmitter transmits the unique information classified by the device information classifier to the management apparatus when there is a request from the management apparatus.

### [Brief Description of Drawings]

Fig. 1 is a system configuration diagram which shows a specific example of a communication system according to a first embodiment.
Fig. 2 is a diagram which shows a specific example of a functional configuration of an integration gateway according to the first embodiment.
Fig. 3 is a diagram which shows a specific configuration example of a second communicator.
Fig. 4 is a diagram which shows a specific example of a functional configuration of a management apparatus according to the first embodiment.
Fig. 5 is a diagram which describes a specific example of network management information.
Fig. 6 is a diagram which describes a specific example of network management information.
Fig. 7 is a diagram which describes a specific example of network management information.
Fig. 8 is a diagram which shows an example of a mode in which network management information is displayed.
Fig. 9A is a diagram which describes a topology diagram showing a physical connection configuration and a topology diagram showing a logical connection configuration.
Fig. 9B is a diagram which describes the topology diagram showing a physical connection configuration and the topology diagram showing a logical connection configuration.
Fig. 9C is a diagram which describes the topology diagram showing a physical connection configuration and the topology diagram showing a logical connection configuration.
Fig. 10 is a sequence diagram which shows a flow of the collection of network management information in the communication system of the first embodiment.
Fig. 11 is a sequence diagram which shows the flow of the collection of network management information in the communication system of the first embodiment.
Fig. 12 is a sequence diagram which shows a flow in which a management apparatus acquires unique information from an integration gateway.
Fig. 13 is a diagram which shows a specific example of a functional configuration of an integration gateway according to a second embodiment.
Fig. 14 is a diagram which shows a specific example of a functional configuration of a management apparatus according to the second embodiment.
Fig. 15 is a diagram which shows a specific example of a change in unique information in accordance with a change in transmission level.
Fig. 16 is a sequence diagram which shows a flow of the collection of network management information according to a second embodiment.
Fig. 17 is a sequence diagram which shows a flow of the collection of network management information according to the second embodiment.

### [Description of Embodiments]

Hereinafter, a communication device, a communication system, and a network management method of embodiments will be described with reference to the drawings.

### (First embodiment)

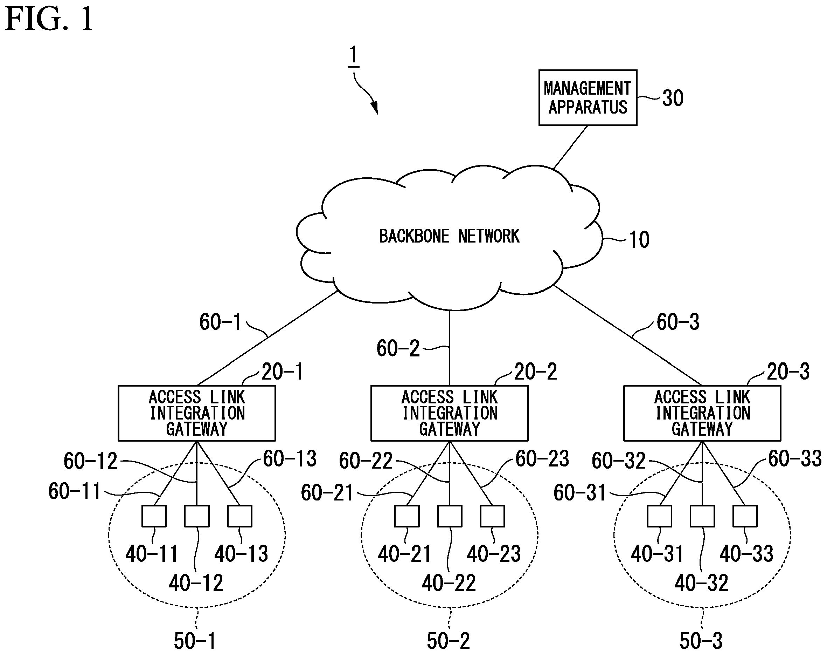

Fig. 1 is a system configuration diagram which shows a specific example of a communication system 1 according to a first embodiment. The communication system 1 includes a backbone network 10, access link integration gateways 20-1 to 20-3, and a management apparatus 30. The backbone network 10 is a network which is a backbone of the communication system 1 and connects the access link integration gateways 20-1 to 20-3 and the management apparatus 30. The access link integration gateways 20-1 to 20-3 are communication devices for relaying communication between a terminal accommodated therein and the backbone network 10. The access link integration gateways 20-1 to 20-3 are capable of communicating with subordinate terminals using different communication protocols. Some or all of the access link integration gateways 20-1 to 20-3 may communicate with subordinate terminals using the same communication protocol.

For example, the access link integration gateway 20-1 relays communication between terminals 40-11 to 40-13 and the backbone network 10. In the same manner, the access link integration gateway 20-2 relays communication between terminals 40-21 to 40-23 and the backbone network 10, and the access link integration gateway 20-3 relays communication between terminals 40-31 to 40-33 and the backbone network 10.

Hereinafter, the access link integration gateways 20-1 to 20-3 are denoted as an integration gateway 20 to simplify the description when there is no need to particularly distinguish them. In the same manner, the terminals 40-11 to 40-13, the terminals 40-21 to 40-23, and the terminals 40-31 to 40-33 are denoted as a terminal 40. The number of integration gateways 20 included in the communication system 1 may be different from in Fig. 1. In the same manner, the number of terminals 40 connected to the integration gateway 20 may be different from shown in Fig. 1. Moreover, a network on the terminal 40 side is positioned in a lower position and a network on the backbone network 10 side is positioned in an upper position on the basis of the integration gateway 20.

The integration gateway 20 acquires terminal information on the terminal 40 accommodated in the integration gateway 20. The terminal information (device information) is information indicating a state, a connection configuration, or the like of the terminal 40. The integration gateway 20 collects terminal information from each terminal 40 connected to the lower side of the integration gateway 20. The integration gateway 20 classifies terminal information collected from each terminal 40 accommodated in the integration gateway 20 into common information transmitted to the management apparatus 30 and unique information stored in the integration gateway 20.

The management apparatus 30 acquires common information from each of the integration gateways 20 connected to the backbone network 10. The management apparatus 30 acquires common information acquired by the classification of terminal information for all terminals 40 to be managed. The management apparatus 30 generates network management information regarding an individual network connected to the backbone network 10 on the basis of the acquired common information. The individual network herein means an individual network formed by a lower side access link accommodated in each integration gateway 20. An individual network 50-1 is shown as an individual network corresponding to the integration gateway 20-1, an individual network 50-2 is shown as an individual network corresponding to the integration gateway 20-2, and an individual network 50-3 is shown as an individual network corresponding to the integration gateway 20-3 in Fig. 1. The management apparatus 30 visualizes and displays network management information in accordance with an operation of a user input to the management apparatus 30.

In the communication system 1 of the present embodiment, the integration gateway 20 integrates an access link of a terminal 40 connected to the integration gateway 20 into one access link and connects the access link to the backbone network 10. For example, Fig. 1 indicates that the access link integration gateway 20-1 integrates access links 60-11 to 60-13 of the terminals 40-11 to 40-13 into an access link 60-1. In the same manner, the access link integration gateway 20-2 integrates access links 60-21 to 60-23 of the terminals 40-21 to 40-23 into an access link 60-2, and the access link integration gateway 20-3 integrates access links 60-31 to 60-33 of the terminals 40-31 to 40-33 into an access link 60-3. In the present embodiment, an access link may be configured in an either a wired or wireless manner.

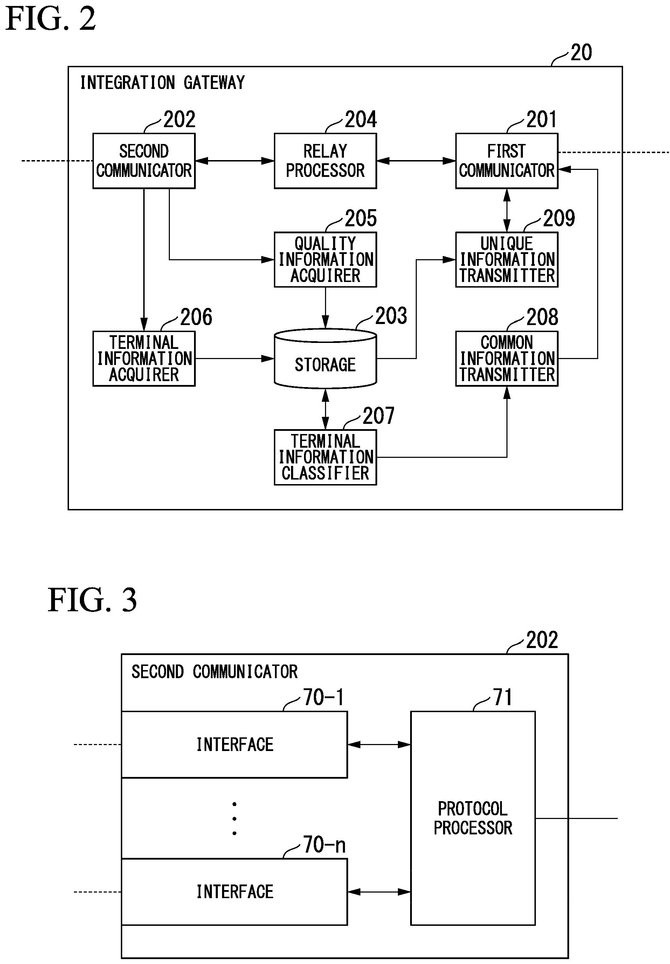

Fig. 2 is a diagram which shows a specific example of a functional configuration of an integration gateway 20 according to the first embodiment. The integration gateway 20 includes a central processor (CPU), a memory, an auxiliary storage device, and the like connected using a bus and executes a program. The integration gateway 20 functions as a device including a first communicator 201, a second communicator 202, a storage 203, a relay processor 204, a quality information acquirer 205, a terminal information acquirer 206, a terminal information classifier 207, a common information transmitter 208, and a unique information transmitter 209 according to execution of a program. All or some of the integration gateways 20 may be realized using hardware such as an application specific integrated circuit (ASIC), a programmable logic device (PLD), or a field programmable gate array (FPGA). The program may be recorded in a computer-readable recording medium. The computer-readable recording medium is a portable medium such as a flexible disk, a magneto-optical disc, a ROM, a CD-ROM, or a storage device such as a hard disk built in a computer system. The program may be transmitted via an electric communication line.

The first communicator 201 is configured to include a communication interface for connecting the integration gateway 20 to the backbone network 10.

The second communicator 202 is configured to include a communication interface for the integration gateway 20 communicating with the integration gateway 20.

Fig. 3 is a diagram which shows a detailed configuration example of the second communicator 202. Specifically, in the second communicator 202, a plurality of interfaces 70-1 to 70-n are detachably configured. Here, n is an integer of one or more, and represents the number of access links which can be accommodated therein. Hereinafter, when there is no distinction, the interfaces 70-1 to 70-n are denoted as an interface 70.

The interface 70 corresponds to connection of a plurality of access links having different communication protocols, converts an input signal into a format which can be processed by the second communicator 202, and outputs the format. The interface 70 may be configured in a mode in which a plurality of communication interfaces having different communication protocols are included in one unit, and may be configured as a plurality of types of units selected in accordance with an individual communication protocol.

In addition, the second communicator 202 includes a protocol processor 71 which performs signal processing (hereinafter referred to as "protocol processing") using a protocol in accordance with an access link connected to the second communicator 202. For example, the protocol processor 71 identifies a communication protocol required for communication via the interface 70 to which the terminal 40 is newly connected at the time of new connection of the terminal 40. The protocol processor 71 stores correspondence between the interface 70 and an identified communication protocol. The protocol processor 71 may support a plurality of different communication protocols by switching software for performing protocol processing in accordance with the interface 70 in which communication occurs.

Returning to the description of Fig. 2, the storage 203 is constituted using a storage device such as a magnetic hard disk device or a semiconductor storage device.

The relay processor 204 performs relay processing of received data between the first communicator 201 and the second communicator 202.

The quality information acquirer 205 acquires quality information indicating quality of communication in each access link. The quality information acquirer 205 generates quality information by monitoring communication of each terminal 40. Specifically, the quality information acquirer 205 generates quality information on the basis of information indicating a communication result such as a packet loss rate or the number of retransmissions. The quality information acquirer 205 causes the storage 203 to store the generated quality information.

For example, the quality information acquirer 205 may determine that the communication quality is "good" when both of the packet loss rate and the number of retransmissions are equal to or smaller than respective threshold values set in advance. In addition, when any one of the packet loss rate and the number of retransmissions is equal to or smaller than the threshold values, it may be determined that the communication quality is "normal." Moreover, when both of the packet loss rate and the number of retransmissions are larger than the threshold values, it may be determined that the communication quality is "bad."

In addition, the quality information acquirer 205 may determine the communication quality by comparing the product or sum of the packet loss rate and the number of retransmissions with the threshold values. Moreover, the communication quality is not limited to stepwise evaluation such as "good," "normal," or "bad," and may be expressed as a score calculated from the packet loss rate, the number of retransmissions, and the like. The determination of the communication quality may also be performed on the basis of any reference in addition to the example described above.

When an access link is wireless, the quality information acquirer 205 may generate quality information on the basis of received power of a radio signal, a signal to noise ratio (SNR), or the like.

The terminal information acquirer 206 acquires terminal information from each terminal 40 accommodated therein. The terminal information acquirer 206 causes the storage 203 to store the terminal information acquired from each terminal 40 in association with identification information of each terminal 40.

The terminal information classifier 207 (device information classifier) classifies various types of information included in terminal information acquired by the terminal information acquirer 206 into common information and unique information. Common information is information essential for generation of network management information among information included in the terminal information. For example, common information is content information commonly included in all terminal information. Unique information is information other than common information included in terminal information. The terminal information classifier 207 outputs classified common information to the common information transmitter 208 and causes the storage 203 to store unique information. Quality information of each access link acquired by the quality information acquirer 205 may be included in the common information described above.

The common information transmitter 208 transmits the common information output from the terminal information classifier 207 to the management apparatus 30 regardless of presence or absence of a request from the management apparatus 30. Specifically, the common information transmitter 208 uses a common protocol for communication with the management apparatus 30 in transmission of common information. The common protocol is a protocol used by all integration gateways 20 connected to the backbone network 10 for transmission of common information. The common information may be transmitted in accordance with an output of common information by the terminal information classifier 207, and may also be transmitted at a predetermined timing set in advance. When common information is transmitted at the predetermined timing set in advance, the common information transmitter 208 may cause the storage 203 to store common information output from the terminal information classifier 207 until a transmission timing arrives.

The unique information transmitter 209 transmits unique information stored in the storage 203 in accordance with a request from the management apparatus 30.

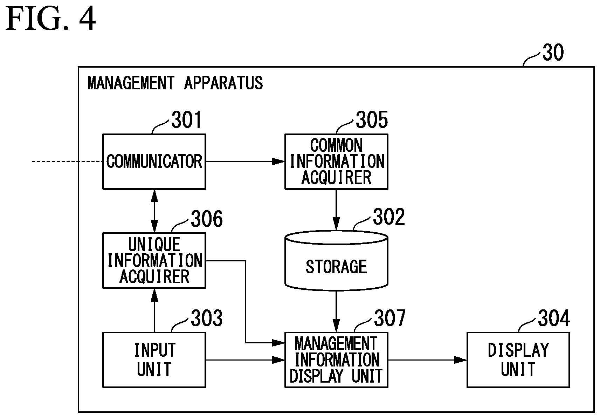

Fig. 4 is a diagram which shows a specific example of a functional configuration of the management apparatus 30 according to the first embodiment. The management apparatus 30 includes a CPU, a memory, an auxiliary storage device, and the like connected by a bus, and executes a management apparatus program. The management apparatus 30 functions as a device including a communicator 301, a storage 302, an input unit 303, a display unit 304, a common information acquirer 305, a unique information acquirer 306, and a management information display unit 307 by execution of the management apparatus program. All or some of respective functions of the management apparatus 30 may be realized using hardware such as an ASIC, a PLD, or an FPGA. The management apparatus program may also be recorded in a computer-readable recording medium. The computer-readable recording medium is a portable medium such as a flexible disk, a magneto-optical disc, a ROM, or a CD-ROM, or a storage device such as a hard disk built in a computer system. The management apparatus program may also be transmitted via an electric communication line.

The communicator 301 is configured to include a communication interface for connecting the management apparatus 30 to the backbone network 10.

The storage 302 is configured using a storage device such as a disk device or a semiconductor storage device. The storage 302 stores network management information.

The input unit 303 is configured using an input device such as a mouse, a keyboard, or a touch panel. The input unit 303 receives an input of an operation to the input unit 303.

The display unit 304 is configured using a display device such as a cathode ray tube (CRT) display, a liquid crystal display, or an organic electro-luminescence (EL) display.

The common information acquirer 305 acquires common information continuously transmitted from the integration gateway 20. Specifically, the common information acquirer 305 acquires common information by communicating with the common information transmitter 208 of the integration gateway 20 using a common protocol. The common information acquirer 305 updates network management information stored in the storage 302 on the basis of the acquired common information.

The unique information acquirer 306 acquires unique information from the integration gateway 20 by transmitting a transmission request for unique information to the integration gateway 20. A timing at which the unique information acquirer 306 transmits a transmission request for unique information may be any timing. For example, the unique information acquirer 306 transmits a transmission request for unique information to the integration gateway 20 indicated by input information when a display operation of unique information concerning an individual network 50 is input.

The management information display unit 307 visualizes network management information stored in the storage 302 and displays the information on the display unit 304 in accordance with a display operation of network management information input to the management information display unit 307 via the input unit 303.

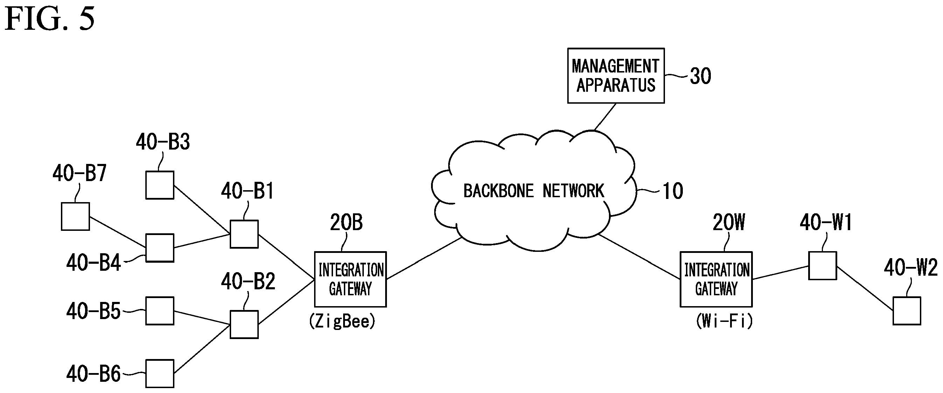

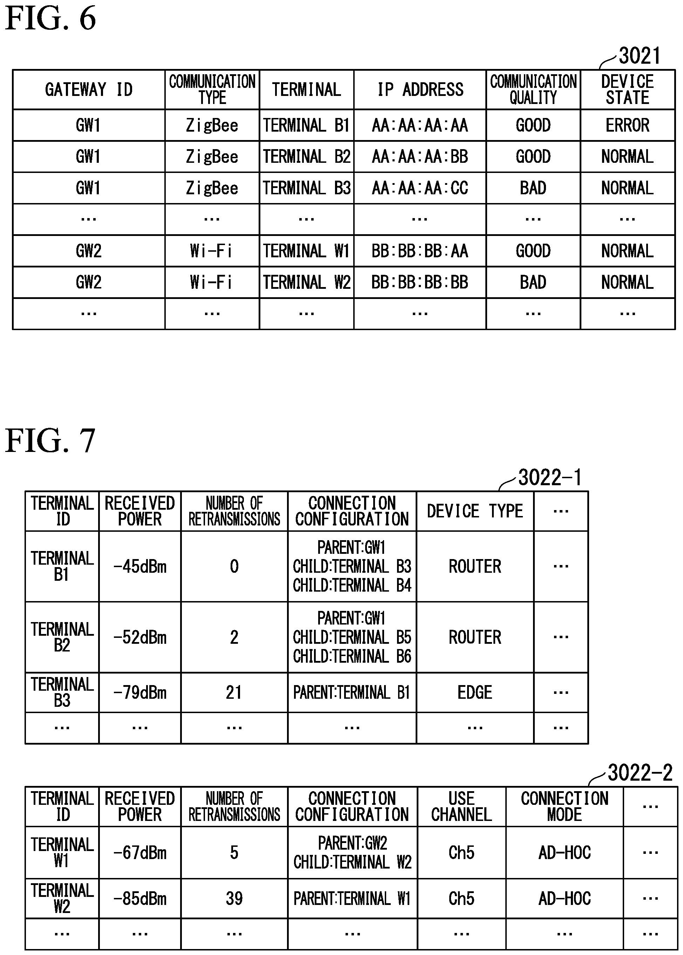

Figs. 5, 6, and 7 are diagrams which describe specific examples of network management information. Fig. 5 shows a specific example of the configuration of the communication system 1, and Fig. 6 shows a specific example of the network management information held in the communication system 1 of the specific example of Fig. 5. A configuration example of Fig. 5 will be described first. The communication system 1 of the example of Fig. 5 has an integration gateway 20B which integrates access links of terminals 40-B1 to 40-B7 communicating using ZigBee (registered trademark) and an integration gateway 20W which integrates access links of terminals 40-W1 and 40-W2 communicating using Wi-Fi (registered trademark) as the integration gateway 20 connected to the backbone network 10.

The integration gateways 20B and 20W collect terminal information from a terminal 40 accommodated in each of the gateways. The integration gateways 20B and 20W generate common information and unique information on the basis of the collected terminal information. On the other hand, the integration gateways 20B and 20W monitor a communication status of each terminal 40 and generate quality information of each access link. The integration gateways 20B and 20W include generated quality information in common information and transmit the common information to the management apparatus 30 by communicating with the management apparatus 30 using a common protocol.

For example, the common information transmitted from the integration gateways 20B and 20W is stored in the management apparatus 30 as a common information table 3021 shown in Fig. 6. The common information table 3021 has a plurality of common information records for each gateway ID. The common information records have respective values of a gateway ID, a communication type, a terminal ID, an IP address, a communication quality, and a device state. The gateway ID is identification information of the integration gateway 20B or 20W which has transmitted common information. The communication type represents a type of an access link accommodated in the integration gateway 20B or 20W indicated by a gateway ID. The terminal ID is identification information of the terminal 40 connected to each access link accommodated in the integration gateway 20B or 20W. The IP address is an Internet Protocol (IP) address of the terminal 40 indicated by a terminal ID. The communication quality represents a communication quality in each access link indicated by quality information included in common information. The device state represents a state of a terminal 40 indicated by a terminal ID.

In the example of Fig. 6, a gateway ID of the integration gateway 20B is represented by "GW1," and a gateway ID of the integration gateway 20W is represented by "GW2." In addition, in the example of Fig. 6, a terminal ID of a terminal 40-Bn (n is an integer of one or more) is represented as "a terminal Bn." For this reason, a communication type corresponding to the gateway ID "GW1" is "ZigBee (registered trademark)," and a communication type corresponding to the gateway ID "GW2" is "Wi-Fi (registered trademark)."

A common protocol used when the integration gateway 20 transmits common information to the management apparatus 30 has a data format corresponding to each item of the common information records.

Moreover, unique information generated by the integration gateways 20B and 20W is stored in each of the integration gateways 20B and 20W as a unique information table 3022-1 or a unique information table 3022-2 shown in Fig. 7. The unique information table 3022-1 is an example of unique information stored in the integration gateway 20B. The unique information table 3022-1 has a unique information records for each terminal ID. The unique information records have respective values of a terminal ID, received power, the number of retransmissions, a connection configuration, a device type, and the like. The terminal ID is identification information of a terminal 40 which has transmitted terminal information. The received power represents power required for a terminal 40 indicated by a terminal ID to receive a radio signal. The number of retransmissions represents the number of times retransmission has occurred in communication of a terminal 40 indicated by a terminal ID. The connection configuration is information indicating a connection configuration between a terminal 40 indicated by a terminal ID and another device. The device type is information indicating what terminal in the individual network 50 a terminal 40 indicated by a terminal ID is. An example of Fig. 7 shows that a terminal 40-B1 (terminal B1) and a terminal 40-B2 (terminal B2) are routers, and a terminal 40-B3 (terminal B3) is a terminal positioned at an edge of a network.

In addition, the unique information table 3022-2 is an example of unique information stored in the integration gateway 20W. The unique information table 3022-2 includes unique information records for each terminal ID. The unique information records have respective values of a terminal ID, received power, the number of retransmissions, a connection configuration, a use channel, a connection mode, and the like. The terminal ID, the received power, the number of retransmissions, and the connection configuration are the same as in the unique information table 3022-1. The use channel represents a frequency channel used for wireless communication of a terminal 40 indicated by a terminal ID. The connection mode represents a mode in which a terminal 40 indicated by a terminal ID is connected to a wireless network. In general, a mode of connecting to a wireless local area network (LAN) such as Wi-Fi (registered trademark) includes modes such as an ad-hoc mode and an infrastructure mode. The connection mode is information representing such a connection mode.

The unique information tables 3022-1 and 3022-2 described above are examples of unique information, and the unique information may include any information as long as it is information which can be acquired concerning the individual network 50.

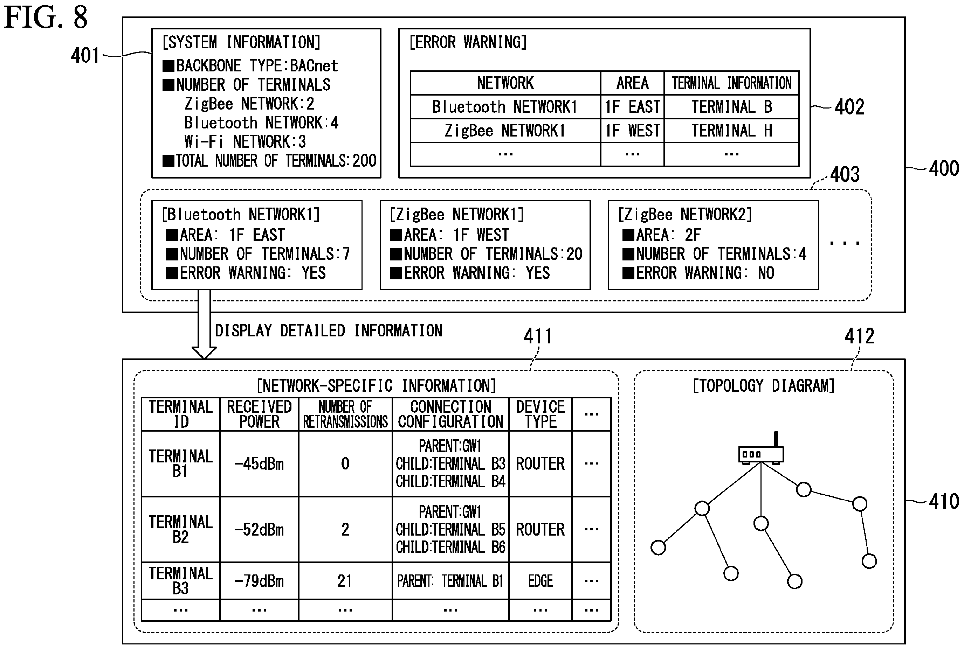

Fig. 8 is a diagram which shows an example of a mode in which network management information is displayed. For example, the network management information is displayed on the display unit 304 in the mode of a display screen 400 and a display screen 410. The display screen 400 is a screen displayed on the basis of information included in common information, and the display screen 410 is a screen displayed on the basis of information included in unique information. The display screen 400 has a system information display area 401, an error warning display area 402, and a management information display area 403 for each individual network 50. In addition, the display screen 410 has a unique information display area 411 and a connection configuration display area 412. For example, the unique information acquirer 306 of the management apparatus 30 acquires unique information from an integration gateway 20 to be displayed at a timing at which an operation of displaying the details of any individual network 50 is input while the display screen 400 is displayed. The unique information acquirer 306 outputs the acquired unique information to the management information display unit 307. The management information display unit 307 generates the display screen 410 on the basis of the unique information output from the unique information acquirer 306 and causes the display unit 304 to display the display screen 410.

With such display of the display screens 400 and 410, the management apparatus 30 can provide a user with information on an individual network 50 of the communication system 1 in a visually recognizable mode. Because the information on the communication system 1 is provided in such a visually recognizable form, an administrator of the communication system 1 can ascertain a state of a network more easily.

A topology diagram 4121 showing a connection configuration of a network may be displayed in the connection configuration display area 412. In this case, the management information display unit 307 can generate the topology diagram 4121 on the basis of information indicating a connection configuration included in unique information. The display screens 400 and 410 shown in Fig. 8 are examples of a mode for displaying network management information, and the network management information may be displayed in any other mode as long as it can be generated on the basis of common information and an individual piece of information. For example, information indicating a state of each terminal 40 may be superimposed and displayed on each terminal 40 shown in the topology diagram 4121. In addition, the topology diagram 4121 may indicate a physical connection configuration of each terminal 40, and may indicate a logical connection configuration thereof.

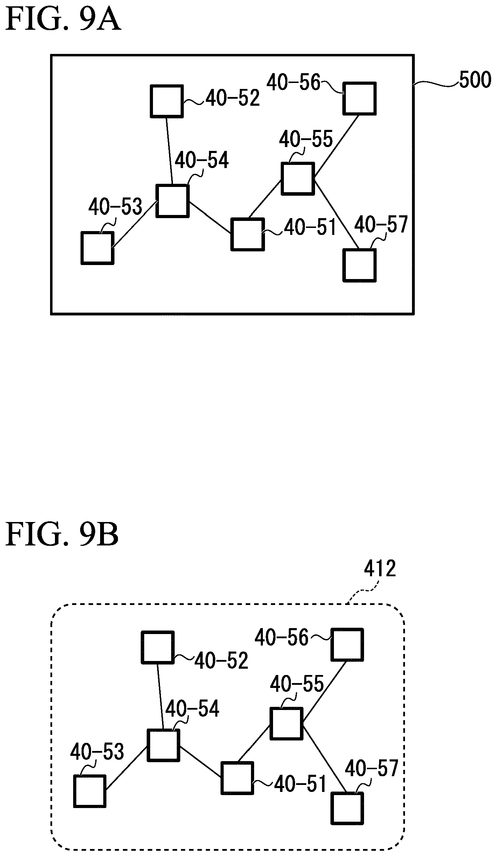

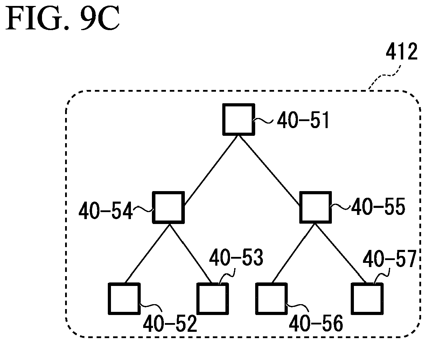

Figs. 9A, 9B, and 9C are diagrams which describe a topology diagram showing the physical connection configuration and a topology diagram showing the logical connection configuration. Fig. 9A is a diagram which shows an arrangement of terminals 40-51 to 40-57 on a floor 500. Fig. 9B is a topology diagram which shows a physical connection configuration of the terminals 40-51 to 40-57 installed on the floor 500. The topology diagram shown in Fig. 9B is obtained by setting a display position of each terminal 40 to a position corresponding to a positional relationship of each terminal 40 on the floor 500 in a display of the connection configuration of each terminal 40. Position information indicating an arrangement position of each terminal 40 is required in display of the topology diagram showing such a physical connection configuration. In this case, for example, the position information of each terminal 40 is stored in the storage 302 of the management apparatus 30 in advance. The management information display unit 307 causes each terminal 40 constituting the topology diagram to be displayed at a position in accordance with the positional relationship of each terminal 40 obtained by the position information in the display of the topology diagram generated on the basis of unique information. Maps of space in which each terminal 40 is arranged may be superimposed in the display of the topology diagram showing a physical connection configuration.

On the other hand, Fig. 9C is a topology diagram which shows a logical connection configuration of the terminals 40-51 to 40-57 installed on the floor 500. The topology diagram shown in Fig. 9C is obtained by setting a display position of each terminal 40 to a position corresponding to a parent-child relationship of each terminal 40 in the display of the connection configuration of each terminal 40. The management information display unit 307 may be configured to display a topology diagram showing a logical connection configuration instead of the topology diagram showing a physical connection configuration when the management information display unit 307 does not store the position information of each terminal 40. Moreover, the management information display unit 307 may be configured to switch the display between the topology diagram showing a physical connection configuration and the topology diagram showing a logical connection configuration in accordance with an operation of a user.

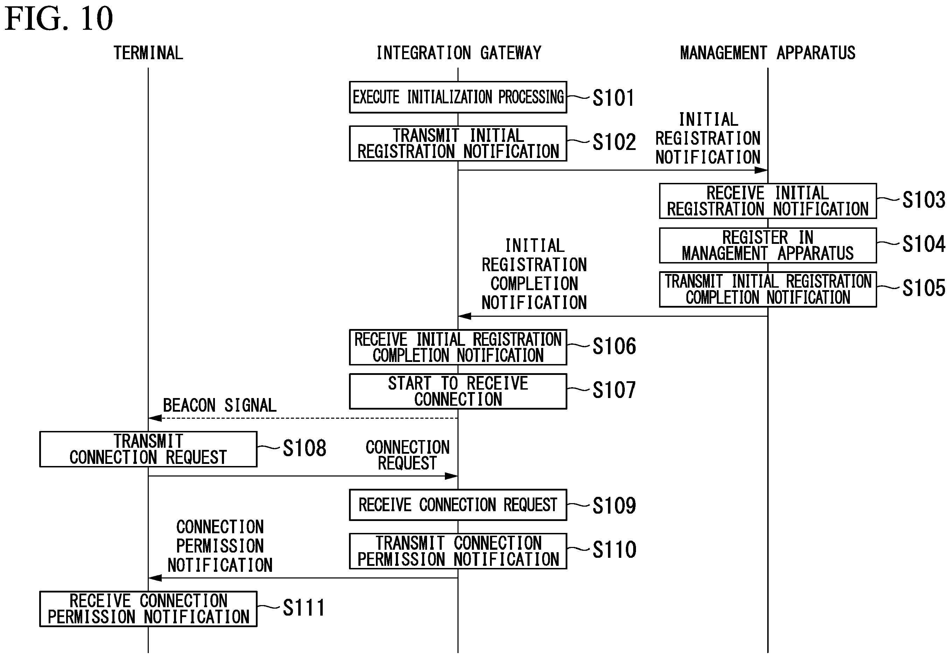

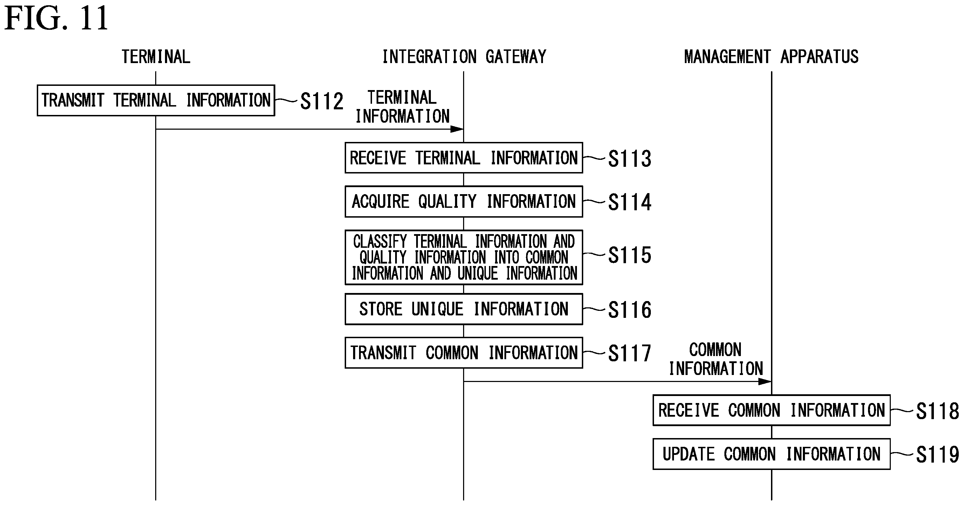

Figs. 10 and 11 are sequence diagrams showing a flow of the collection of network management information in the communication system 1 of the first embodiment. First, the integration gateway 20 performs initialization processing at the time of starting the system (step S101). The integration gateway 20 performs a software update in accordance with an interface connected thereto in the initialization processing. With this software update, the integration gateway 20 starts as a gateway device which mutually converts a communication protocol of an access link on a lower side and a communication protocol of an access link on an upper side. After the initialization processing is completed, the integration gateway 20 transmits an initial registration notification including identification information thereof, and information indicating a type of an access link which can be accommodated therein to the management apparatus 30 (step S102).

The management apparatus 30 receives the initial registration notification transmitted from the integration gateway 20 (step S103). The management apparatus 30 registers the integration gateway 20 which has transmitted the initial registration notification therein on the basis of the acquired initial registration notification (step S104). Hereinafter, registration of this integration gateway 20 is described as initial registration. The management apparatus 30 transmits an initial registration completion notification indicating completion of the initial registration to the integration gateway 20 which is a transmission source of the initial registration notification (step S105). The integration gateway 20 receives the initial registration completion notification (step S106). The integration gateway 20 starts to receive a connection request transmitted from the terminal 40 once an initial registration completion notification is received (step S107). For example, the integration gateway 20 starts to transmit a beacon signal for notifying of its presence once the initial registration completion notification is received.

On the other hand, the terminal 40 detects the beacon signal transmitted from the integration gateway 20 and transmits a connection request to the integration gateway 20 which is a transmission source of the beacon signal (step S108). The integration gateway 20 receives the connection request transmitted from the terminal 40 (step S109). The integration gateway 20 determines whether the terminal 40 can be accommodated therein, and transmits a connection permission notification to the terminal 40 when it is determined that the terminal 40 can be accommodated therein (step S110). For example, the determination as to whether this connection can be made may be performed on the basis of a status of resources (for example, the number of terminals that can be accommodated therein, and the like) of the integration gateway 20, and may be performed based on whether the terminal 40 has a qualification for being connected to the integration gateway 20.

The terminal 40 receives a connection permission notification transmitted from the integration gateway 20 (step S111). Once this connection permission response is received, the terminal 40 enters a state in which the terminal 40 can communicate with the integration gateway 20.

The terminal 40 transmits terminal information to the integration gateway 20 if the terminal 40 enters the state in which it can communicate with the integration gateway 20 (step S112). The integration gateway 20 receives the terminal information transmitted from the terminal 40 (step S113). On the other hand, the integration gateway 20 acquires quality information on the basis of communication with the terminal 40 (step S114). The integration gateway 20 classifies the acquired terminal information and quality information into common information to be transmitted to the management apparatus 30 and unique information to be stored in the integration gateway 20 (step S115).

The integration gateway 20 stores the acquired unique information (step S116). On the other hand, the integration gateway 20 transmits the acquired common information to the management apparatus 30 (step S117). The management apparatus 30 receives the common information transmitted from the integration gateway 20 (step S118). Specifically, the integration gateway 20 generates a common information transmission message for transmitting the acquired common information according to a common protocol. The integration gateway 20 transmits the generated common information transmission message to the management apparatus 30. The management apparatus 30 receives the common information transmission message by communicating with the integration gateway 20 using the common protocol.

The management apparatus 30 updates common information stored therein with common information acquired from the integration gateway 20 (step S119).

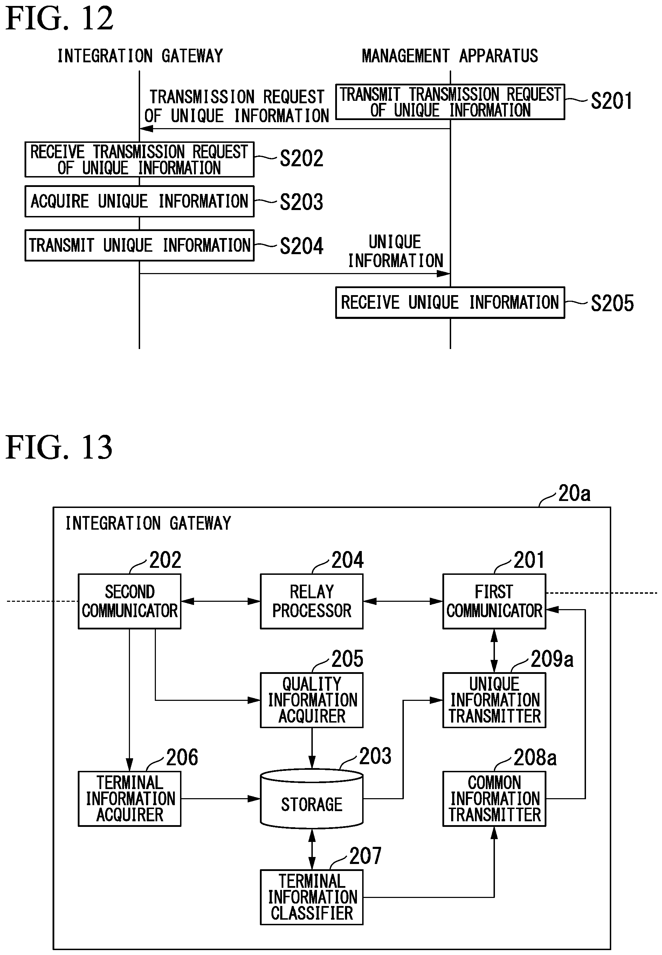

Fig. 12 is a sequence diagram which shows a flow in which the management apparatus 30 acquires unique information from the integration gateway 20. A timing at which the management apparatus 30 acquires unique information is a timing at which the unique information is required in the management apparatus 30. For example, a timing at which acquisition of unique information is required in the management apparatus 30 is when an operation of instructing display of the unique information is input.

When such an acquisition timing has arrived, the management apparatus 30 first transmits a transmission request for unique information to the integration gateway 20 holding required unique information (step S201). The integration gateway 20 receives the transmission request for unique information transmitted from the management apparatus 30 (step S202). The integration gateway 20 acquires unique information stored in the storage 203 of the integration gateway 20 (step S203). The integration gateway 20 transmits the acquired unique information to the management apparatus 30 (step S204).

Specifically, the integration gateway 20 generates a transmission message for transmitting unique information according to a predetermined protocol on the basis of the unique information stored in the integration gateway 20. The integration gateway 20 transmits the generated notification message to the management apparatus 30. The management apparatus 30 receives the notification message transmitted from the integration gateway 20. The integration gateway 20 performs the instructed display of unique information on the basis of the acquired notification message.

Here, a configuration in which the management apparatus 30 acquires unique information from the integration gateway 20 in accordance with an input of a display operation of the unique information to the management apparatus 30 has been described. This is aimed at preventing a communication band of an access link from being compressed due to collection of network management information by distributing and holding unique information in each integration gateway 20. In that sense, the management apparatus 30 may be configured to store unique information therein on condition of an update frequency which does not compress a communication band. In this case, the management apparatus 30 transmits an acquisition request for unique information to the integration gateway 20 at a timing at which a predetermined update timing arrives. The management apparatus 30 updates unique information stored therein on the basis of a notification message transmitted in accordance with an acquisition request.

In the communication system 1 of the first embodiment configured in this manner, information required for network management is classified into common management information common to all access links and unique information unique to each access link, and is distributed and held in each integration gateway 20 and the management apparatus 30. The management apparatus 30 continuously collects common management information from each gateway device and acquires unique information when necessary. With such a configuration, the communication system 1 can efficiently collect management information on various types of access links.

The integration gateway 20 of the first embodiment includes a second communicator 202 capable of supporting a plurality of communication protocols. Because the integration gateway 20 includes such a second communicator 202, it is possible to easily add or delete different access links.

### (Second embodiment)

The communication system 1 of a second embodiment is different from the communication system 1 of the first embodiment in that an integration gateway 20a is provided instead of the integration gateway 20 and a management apparatus 30a is provided instead of the management apparatus 30.

Fig. 13 is a diagram which shows a specific example of a functional configuration of the integration gateway 20a in the second embodiment. The integration gateway 20a is different from the integration gateway 20 in the first embodiment in that a common information transmitter 208a is provided instead of the common information transmitter 208 and a unique information transmitter 209a is provided instead of the unique information transmitter 209.

The common information transmitter 208a transmits common information to the management apparatus 30a on the basis of a transmission level notified of by the management apparatus 30a. The transmission level is information for limiting an amount of common information or unique information transmitted per unit time from the integration gateway 20a. The transmission level is determined by the management apparatus 30a and the integration gateway 20a is notified thereof. For example, the transmission level is information indicating a type of information included in common information or unique information. The common information transmitter 208a transmits a type of information designated by a transmission level to the management apparatus 30a as common information. In the same manner, the unique information transmitter 209a transmits a type of information designated by a transmission level to the management apparatus 30a as unique information. The transmission level is not limited to designating an information type, but may notify of any other content as long as an amount of information transmitted can be adjusted. For example, a transmission frequency, a transmission timing, or the like of information may be designated as a transmission level.

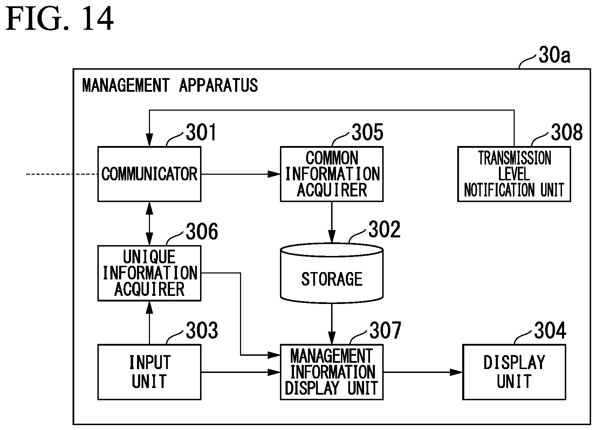

Fig. 14 is a diagram which shows a specific example of a functional configuration of the management apparatus 30a according to the second embodiment. The management apparatus 30a is different from the management apparatus 30 of the first embodiment in that a transmission level notification unit 308 is further provided.

The transmission level notification unit 308 determines a transmission level and notifies the integration gateway 20a of the determined transmission level. The transmission level notification unit 308 may determine a transmission level at each predetermined timing and perform notification of the transmission level, or may be configured to perform the notification only when a transmission level needs to be changed.

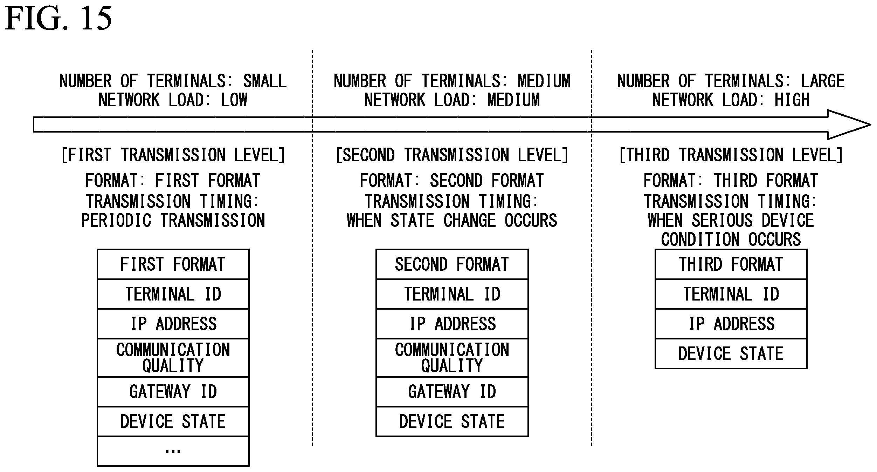

Fig. 15 is a diagram which shows a specific example of a change in unique information in accordance with a change in a transmission level. In a large-scale communication system, there are cases in which the number of terminals is huge or a large amount of traffic occupies a network. Under such conditions, transmission or reception of network management information may cause network congestion. For this reason, the management apparatus 30a monitors a change in system scale and a load state of a network, determines a transmission level in accordance with the system scale and the load state of a network, and notifies the integration gateway 20 of the decided transmission level. With the notification of such a transmission level, it is possible to suppress an increase in load of a network.

For example, Fig. 15 is an example of a case in which three stages of transmission levels are defined. In this manner, a transmission level is changed such that less information is transmitted in accordance with an increase in the number of terminals in the communication system 1 or a soaring network load. As a criterion to determine a transmission level, the number of terminals or information other than a network load may also be used. The transmission level may be notified of with respect to transmission of any one of common information and unique information.

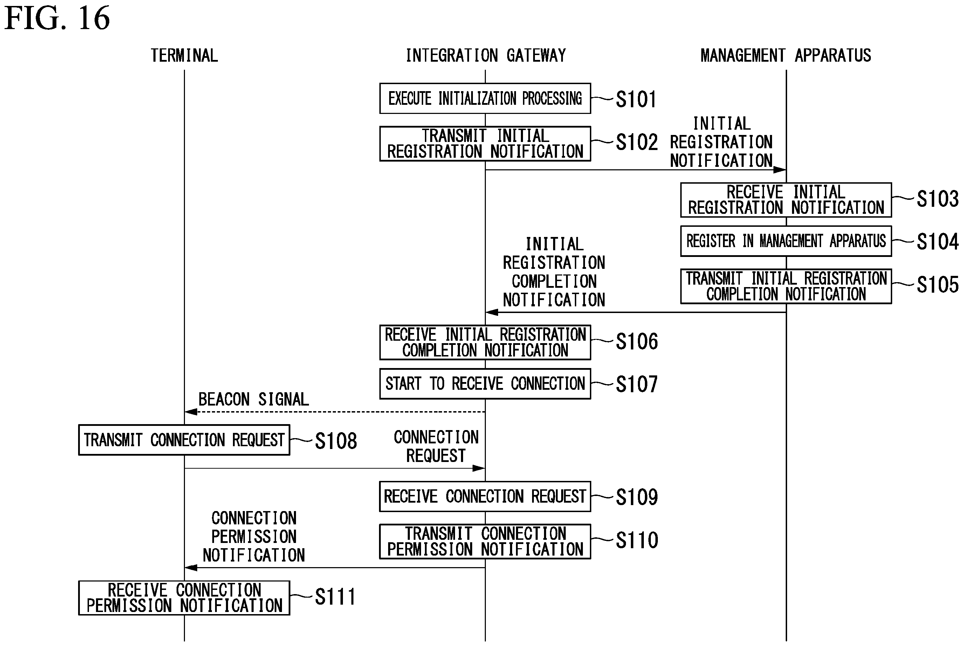

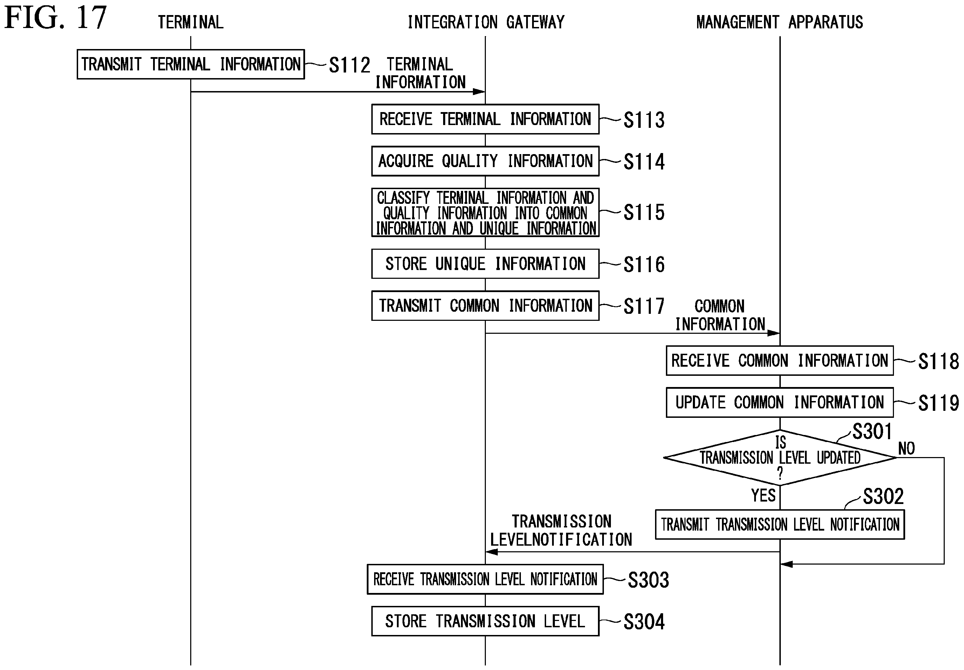

Figs. 16 and 17 are sequence diagrams which show a flow of collecting network management information in the second embodiment. Among processing shown in the sequence diagrams of Figs. 16 and 17, the same processing as in the sequence diagrams of Figs. 10 and 11 is given the same reference numeral as in Figs. 10 and 11, and the description is omitted. Here, it is assumed that a transmission level is notified of with respect to the transmission of unique information.

The management apparatus 30a determines whether to change the transmission level of unique information if common information is updated in step S119 (step S301). This determination is performed by the transmission level notification unit 308. For example, it is assumed that a first transmission level, a second transmission level, and a third transmission level are defined as transmission levels. The transmission levels request larger information amounts of unique information in order of the first transmission level, the second transmission level, and the third transmission level. It is assumed that unique information is transmitted at the second transmission level at normal times.

For example, determination as to whether to change a transmission level is performed on the basis of the total number of terminals at a timing at which common information is updated. The total number of terminals is the total number of terminals 40 accommodated in all the integration gateways 20a connected to the backbone network 10. For example, the transmission level notification unit 308 determines to change the second transmission level to the first transmission level when the total number of terminals exceeds a predetermined first threshold value. On the other hand, the transmission level notification unit 308 determines to change the second transmission level to the third transmission level when the total number of terminals is below a predetermined second threshold value. In addition, when the total number of terminals is equal to or smaller than the first threshold value and is equal to or larger than the second threshold value, the transmission level notification unit 308 determines not to change a transmission level from the second transmission level.

When it is determined not to change a transmission level (step S301-No), the management apparatus 30a ends processing in the present sequence, and waits for reception of next common information. On the other hand, when it is determined to change a transmission level (step S301-YES), the transmission level notification unit 308 notifies the integration gateway 20a of a transmission level notification indicating a changed transmission level (step S302). The integration gateway 20a receives the transmission level notification (step S303). The integration gateway 20a stores a transmission level notified of in the received transmission level notification (step S304). The integration gateway 20a executes transmission of subsequent common information at the transmission level that is notified of.

In the communication system 1 of the second embodiment configured in this manner, the management apparatus 30a notifies each integration gateway 20a of a transmission level of common information in accordance with a state of the communication system 1. The integration gateway 20a performs transmission of common information at a transmission level notified of by the management apparatus 30a. That is, the communication system 1 of the second embodiment can acquire common information using an amount of information in accordance with a state of the system. With such a function, the communication system 1 of the second embodiment can acquire network management information more efficiently.

Hereinafter, a modification of the communication system 1 of the embodiment will be described.

The transmission of common information may be performed in accordance with occurrence of an event related to the terminal 40 such as a new connection or removal of the terminal 40, or may be performed in accordance with a detection of the terminal 40 whose communication quality is equal to or smaller than a certain threshold value. By transmitting common information at such a timing, it is possible to further reduce an amount of traffic on a network.

Information transmitted as common information and unique information is not limited to network management information. The transmission method of common information and unique information described above may also be applied to transmission of information other than the network management information in the communication system.

According to at least one of the embodiments described above, the integration gateway 20 which classifies information acquired from the terminal 40 into common information and unique information, transmits the common information to the management apparatus 30, and stores the unique information, and the management apparatus 30 which acquires the unique information from the integration gateway 20 at a predetermined timing are provided, and thereby it is possible to reduce a load on management of a network in a communication system in which different communication protocols are mixed.

While several embodiments of the present invention have been described, these embodiments are presented as examples, and are not intended to limit the scope of the invention. These embodiments can be implemented in various other forms, and various omissions, replacements, and modifications can be made in a range not departing from the gist of the invention. These embodiments and modifications thereof are included in the invention described in the claims and equivalents thereof as well as in the scope and the gist of the invention.

## Claims

1. A communication device which, in a communication system having a management apparatus for acquiring device information on a device to be managed, transmits the device information to the management apparatus, the communication device comprising:
a device information classifier configured to classify the device information into common information which is device information essential to the device related to the communication device and unique information which is device information unique to the device related to the communication device; and
a unique information transmitter configured to transmit the unique information classified by the device information classifier to the management apparatus when there is a request from the management apparatus.

2. The communication device according to claim 1, further comprising:
a communicator configured to connect the device thereto,
wherein the communicator switches communication protocols in accordance with the connected device.

3. The communication device according to claim 1, further comprising:
a quality information acquirer configured to acquire quality information indicating quality of communication of the device; and
a common information transmitter configured to transmit the common information to the management apparatus,
wherein the device information classifier classifies the quality information as the common information, and
the common information transmitter transmits common information including the quality information to the management apparatus.

4. The communication device according to claim 3,
wherein the common information transmitter or the unique information transmitter transmits the common information or the unique information to the management apparatus when there is a change in a network of the communication system or a state of the device.

5. A communication system comprising:
the communication device according to any one of claims 1 to 4; and
a management apparatus which is a device related to the communication device and is configured to acquire unique information which is device information unique to a device among device information on the device to be managed thereby from the communication device when necessary.

6. The communication system according to claim 5,
wherein the management apparatus includes a management information display unit which causes a display device capable of displaying information to display common information which is device information essential to the device related to the communication device and unique information which is device information unique to the device related to the communication device.

7. The communication system according to claim 6,
wherein the management information display unit generates a diagram showing a connection configuration of the device and causes the display device to display the connection configuration on the basis of the common information or the unique information.

8. The communication system according to claim 5,
wherein the management apparatus further includes a transmission level notification unit which notifies the communication device of a transmission level limiting an information amount of the common information or the unique information transmitted per unit time from the communication device, and
the communication device transmits the common information or the unique information such that the information amount of the common information or the unique information transmitted per unit time is an information amount in accordance with the transmission level notified of by the management apparatus.

9. The communication system according to claim 8,
wherein the transmission level notification unit determines a transmission level of which the communication device is notified on the basis of the number of the devices related to the communication device.

10. The communication system according to claim 8,
wherein the transmission level notification unit determines a transmission level of which the communication device is notified on the basis of an amount of traffic relating to the communication device.

11. The communication system according to claim 8,
wherein the transmission level notification unit determines a transmission level of which the communication device is notified on the basis of the number of the communication devices.

12. The communication system according to claim 8,
wherein the transmission level is information indicating a transmission timing or a transmission frequency of the common information or the unique information.

13. A network management method performed by a communication system including the communication device described in any one of claims 1 to 4, and a management apparatus which acquires device information on a device to be managed from the communication device, the method comprising:
a device information classifying step of classifying, by the communication device, the device information into common information which is device information essential to the device related to the communication device and unique information which is device information unique to the device related to the communication device;
a unique information transmitting step of transmitting, by the communication device, the unique information classified in the device information classifying step to the management apparatus when there is a request from the management apparatus, and
a step of requesting, by the management apparatus, the communication device to transmit the unique information.
